# EUROPEAN PATENT SPECIFICATION

(11) **EP 2 423 847 B1**
(45) Date of publication and mention of the grant of the patent: **27.03.2013**
(21) Application number: 10305924.2
(22) Date of filing: 27.08.2010
(51) Int. Cl.: G06K 7/08, G06K 7/10, H01Q 1/22, G06K 7/00

(54) **System and method for multiple reading interface with a simple RFID antenna**
System und Verfahren für mehrfache Leseschnittstelle mit einer einfachen RFID-Antenne
Système et procédé pour interface de lecture multiple avec une antenne RFID simple

(43) Date of publication of application: 29.02.2012
(73) Proprietor: Psion Inc., Mississauga, ON L5N 7J9 (CA)
(72) Inventor: Barry, Fabien, 83190, OLLIOULLES (FR); Collombon, Jan-Manuel, 13390, AURIOL (FR); Fornier, Nicolas, 13001, MARSEILLE (FR)
(74) Representative: Joly, Jean-Jacques

(56) References cited:
- EP-A1- 1 605 391
- US-A1- 2006 066 441
- US-A1- 2007 222 609

## Description

The present invention relates generally to RFID antennas and specifically, to an RFID antenna capable of reading multiple fields.

### BACKGROUND

It is common to track and attempt to locate objects, such as goods or other articles of manufacture, during their manufacture, transport and/or distribution. Wireless communication labels may be attached to or associated with such objects to provide information about the objects such as their identification number, expiration date, date of manufacture, lot number, and the like. An example of such a wireless communication label is a radio frequency identification (RFID) tag.

In order to communicate with the wireless communication labels, a wireless transmission interrogator is placed in the proximity of the objects. The wireless transmission interrogator uses an antenna to generate a radiation field for communication with the wireless communication label. An example of such a wireless transmission interrogator is an RFID reader.

There are generally three different types of RFID tags: active RFID tags, passive RFID tags, and battery assisted passive (BAP) RFID tags. Active RFID tags contain a battery and can transmit signals autonomously. Passive RFID tags have no battery and require an external source to provoke signal transmission. BAP RFID tags require an external source to wake up but have significant higher forward link capability providing greater range.

However, all three types of RFID tags are designed to operate at relatively short range. Accordingly, the RFID reader's antenna must be placed in relatively close proximity to the RFID tag in order to read it. In order to address this, different antennas have been developed to provide different field sizes for reading the RFID tags. Unfortunately, antennas that have a large field size typically have a lower resolution. That is, for example, an antenna with a large field size could locate a target box out of a plurality of boxes, but it probably could not locate a target item from within the target box. Thus, different antennas, or different RFID readers altogether, may need to be used to locate both the target box and the target item. EP 1 605 391 describes an antenna according to the preamble of claim 1. US 2007/222609 describe another antenna.

Accordingly, it is desirable to provide a solution that obviates or mitigates at least some of the above mentioned disadvantages.

### SUMMARY

In accordance with an aspect of the present invention there is provided a multi-field antenna according to claim 1. There is also provided a mobile computer according to claim 13.

### BRIEF DESCRIPTION OF THE DRAWINGS

Embodiments of the present invention will now be described by way of example only with reference to the following drawings in which:
**Figure 1** is drawing illustrating a sample mobile computer;
**Figure 2** is block diagram illustrating components of the mobile computer;
**Figure 3a** is drawing illustrating a multi-field antenna;
**Figure 3b** is drawing illustrating a wide field of the multi-field antenna;
**Figure 3c** is drawing illustrating a narrow field and a pointed field of the multi-field antenna;
**Figure 4a** is a picture of a test tube;
**Figure 4b** is a picture of an RFID tag of the test tube;
**Figure 5a** is a picture of a box storing the test tubes;
**Figure 5b** is another picture of the box storing the test tubes; and
**Figure 5c** is a picture of an RFID scanner scanning the box of test tubes.

### DETAILED DESCRIPTION OF THE PREFERRED EMBODIMENTS

The following described a multi-field antenna and a RFID reader configured for use therewith. The multi-field antenna facilitates communication between the RFID reader and an RFID tag using a plurality of different field sizes, thereby accelerating location of an individual item. For convenience, like numerals in the description refer to like structures in the drawings.

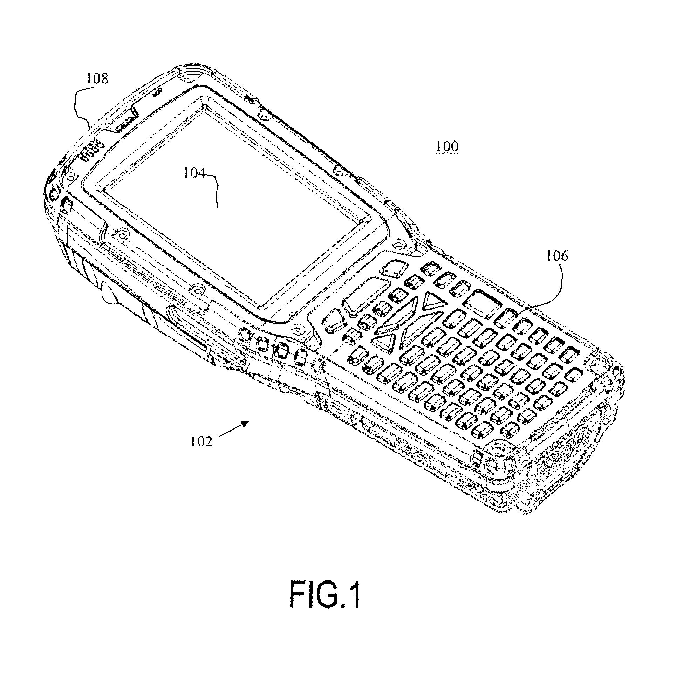

Referring to Figure 1 a mobile computer is shown generally by numeral 100. The mobile computer 100 comprises a main body 102, a display 104, a keyboard 106, and an external antenna connector (not shown). In the present embodiment, the external antenna connector is located beneath a protested cap or cover 108. The cap 108 protects the external antenna connector from the elements when the multi-field antenna is not connected. Alternatively, the external antenna connecter may be located on the periphery of the mobile computer 100.

Additionally, the mobile computer 100 may have the capability to wirelessly communicate data and/or voice, to and from servers as well as data acquisition sources within a communication network. One or more circuit boards are housed within the mobile computer 100 for providing the electronic components required to implement at least a portion of the functionality provided by the mobile computer 100. It will be appreciated that various configurations of mobile computers having different internal and external components can be used without affecting functionality of the invention.

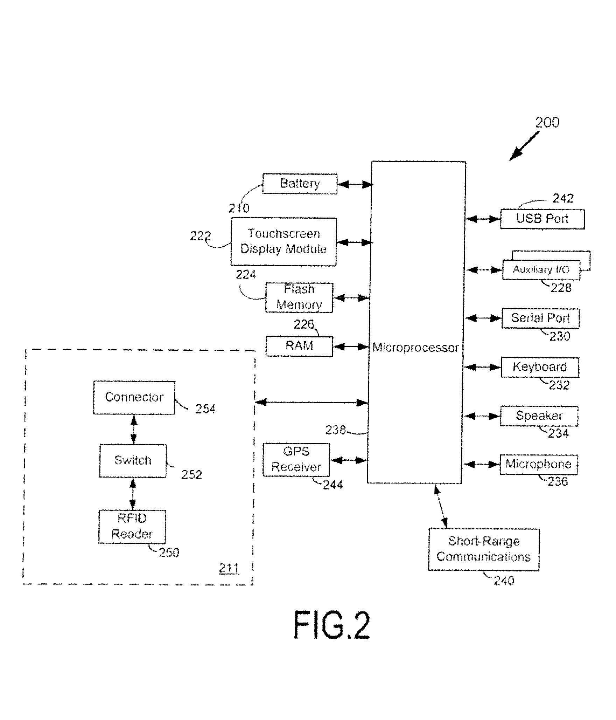

Referring to Figure 2, a block diagram illustrating an example of the functionality provided by the mobile computer 100 is shown. The mobile computer 100 includes a microprocessor 238 for controlling general operation of the mobile computer 100. The microprocessor 238 also interacts with functional device subsystems such as a communication subsystem 211, display 104, a flash memory 224, random access memory (RAM) 226, auxiliary input/output (I/O) subsystems 228, serial port 230, keyboard 106, speaker 234, microphone 236, and a short-range communications subsystem 240 such as Bluetooth™ for example.

The mobile computer 100 may include a power source 210, such as a rechargeable battery which may also be removable and replaceable from the mobile computer. The mobile computer 100 may also include a positioning device 244, such as a GPS receiver for example, for receiving positioning information.

Operating system software used by the microprocessor 238 may be stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, enables execution of software applications on the mobile computer 100. A predetermined set of applications, which control basic device operations, may be installed on the mobile computer 100 during its manufacture. These basic operations typically include data and voice communication applications, for example. Additionally, applications may also be subsequently loaded onto the handheld device 100 through the communication subsystem 211, an auxiliary I/O subsystem 228, serial port 230, USB port 242, short-range communications subsystem 240, or any other suitable subsystem, and installed by a user in RAM 226, or the persistent store 224, for execution by the microprocessor 238. Such flexibility in application installation increases the functionality of the handheld device 100 and may provide enhanced on-device features, communication-related features, or both.

As will be apparent to those skilled in field of communications, the particular design of the communication subsystem 211 depends on the communication network in which mobile computer 100 is intended to operate, and may include communication functionalities such as Wi-Fi based on 802.11 standards, 3G standards, Long Term Evolution (LTE), WiMax, 4G standards and the like. The communication subsystem further provides an internal RFID reader 250. The RFID reader 250 is coupled via a switch 252 to the external antenna connector 254.

The display module 222 is used to visually present an application's graphical user interface (GUI) to the user. Depending on the type of mobile computer 100, the user may have access to various types of input device, such as, for example, a scroll wheel, trackball, light pen and/or a touch sensitive screen.

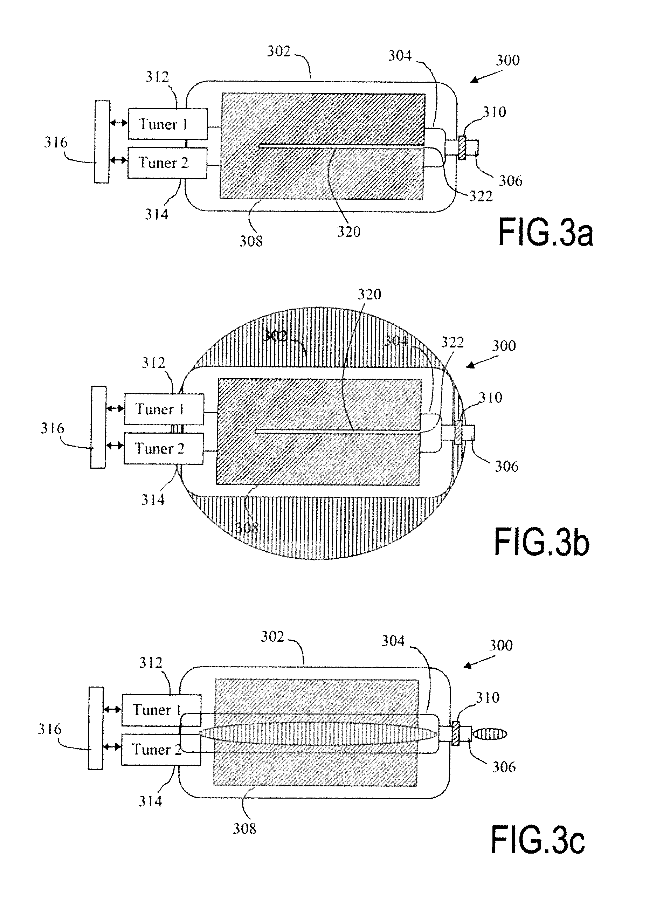

Referring to Figure 3a, the multi-field antenna is illustrated generally by numeral 300. The multi-field antenna includes a large magnetic loop 302, a small magnetic loop 304, a ferrite nub 306, a first metallic element 308, a second metallic element 310, a first tuner 312, a second tuner 314, and a mobile computer interface 316.

In the present embodiment, the mobile computer interface is configured to couple with the external antenna connector 254 on the mobile computer 100. The first tuner 312 is configured to provide impedance matching between the RFID reader 250, which typically has an output impedance of 50 ohms, and the targe magnetic loop 302. Similarly, the second tuner 314 is configured to provide impedance matching between the RFID reader 250 and the small magnetic loop 302. Which magnetic loop, and its corresponding tuner, is activated depends on the position of the switch 252.

The large magnetic loop 302 is generally rectangular in shape and has one or more turns of wire. The large magnetic loop 302 provides a wide field and can read a large population of RFID tags within its range. An example application for which the large magnetic loop 302 could be useful is an inventory application. In the present embodiment, the large magnetic loop 302 is configured to read RFID tags at a distance of up to approximately 5 cm to 15 cm. Referring to Figure 3b, the wide field activated by the large magnetic loop 302 is shown.

The first metallic element 308 is a solid metal that is generally rectangular in shape and sized smaller than the large magnetic loop 302 and large enough to cover a substantial portion of the small magnetic loop 304. The first metallic element 308 is not completely closed-off and includes a slot 320. The slot 320 extends along a length of the first metallic element 302 from an aperture 322 at one end of the first metallic element 308 to a point proximal an opposite end of the first metallic element 308. Thus, the structural integrity of the first metallic element 308 as a single entity is maintained. The dimension of the slot helps define the field area of the small magnetic loop 304.

The small magnetic loop 304 is generally rectangular in shape and has one or more turns of wire. The small magnetic loop 304 provides a narrow field and can read a population of RFID tags within the range. The size of the narrow field is influenced by the dimension of the slot 320, as the magnetic field generated by the small magnetic loop 304 radiates there through. In the present embodiment, the small magnetic loop 304 is configured to read RFID tags at a distance of approximately 2 cm to 3 cm. Referring to Figure 3c, the narrow field activated by the small magnetic 304 loop is shown.

In the present embodiment, the large magnetic loop 302 and the small magnetic loop 304 are in substantially the same plane and the first metallic element 308 is minimally offset, either above or below the small magnetic loop 306. Alternatively, the large magnetic loop 304 and the first metallic element 308 are in substantially the same plane and the small magnetic loop 306 is minimally offset, either above or below the first metallic element 308. Yet alternatively, each of the large magnetic loop 302, the small magnetic loop 304 and the first metallic element 308 are minimally offset, so that each is in a different plane.

The ferrite nub 306 is coupled with the small magnetic loop 304 at an end distal to the mobile computer interface 316. In the present embodiment, the ferrite nub 306 is cylindrical in shape and is thereby configured to provide a pointed field which allows identifying a unique item with pinpoint accuracy. Further, in the present embodiment, the composition of the ferrite nub 306, as well as its size and shape, are selected to provide a target frequency. In the present embodiment, the target frequency is 13.56 MHz. The second metallic element 310 is coupled with the ferrite nub 306 to help localize the pointed field, thereby inhibiting reading RFID tags neighbouring the target RFID tag. In the present embodiment, the second metallic element 310 is in annular ring configured to fit snugly about the ferrite nub 306, proximal the small magnetic loop 304. Accordingly, the pointed field is localized in a direction away from the small magnetic loop 304.

The first metallic element 308 creates a mask for the large magnetic loop 302 from the small magnetic loop 304. That is, when the large magnetic loop 302 is active, a current may be induced in the small magnetic loop 304. In turn, the induced current generates a magnetic field which may interfere with the operation of the large magnetic loop 302. Accordingly, the first metallic element 308 inhibits these effects, thereby masking the large magnetic loop 302 from the small magnetic loop 304.

Further, in operation, one of the large magnetic loop 302 or the small magnetic loop 304 is turned on at a time. The other magnetic loop is left open or has a load applied to it to further inhibit interference.

As previously mentioned, the system described above is designed specifically for the high frequency of 13.56 MHz used in RFID systems. However, it is anticipated that the multi-field antenna 300 can be designed to operate at different frequencies, as desired by an antenna designer.

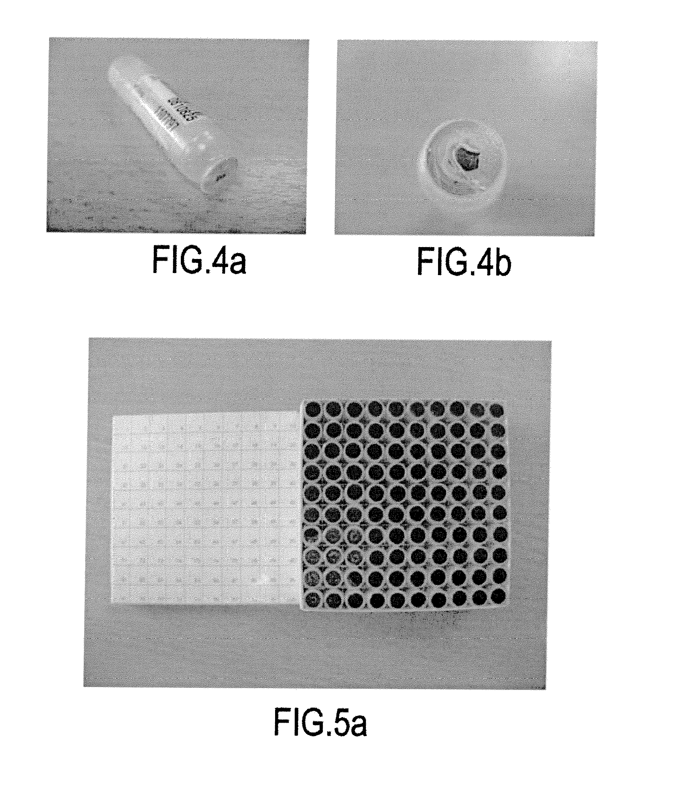

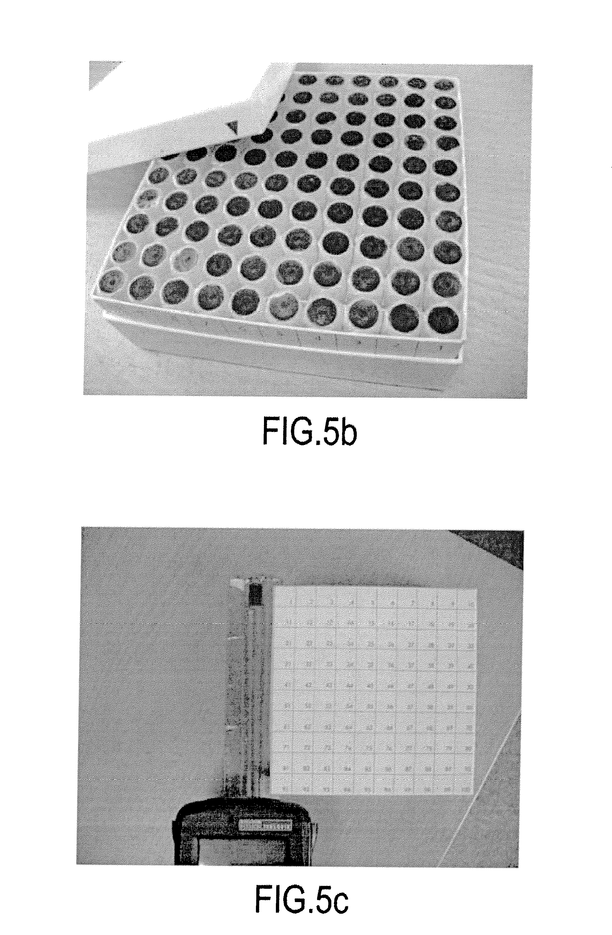

A sample application of the operation of the multi-field antenna 300 is described as follows. In the present example, an operator of a mobile computer 100 desires to locate a target test tube amongst a plurality of test tubes. An example of such a test tube is illustrated in Figures 4a and 4b Each of the test tubes is tagged with unique RFID tag and stored in one of a plurality of boxes. Each box stores the test tubes in an array. An example of such a box is illustrated in Figure 5a, 5b and 5c.

Before beginning to search for the target test tube, the operator attaches the multi-field antenna 300 to the mobile computer 100, if it is not already attached, and selects the wide field offered by the large magnetic loop 302. Accordingly, the switch 252 facilitates enabling the first tuning circuit for tuning the large magnetic loop 302. In the present embodiment, the small magnetic loop 304 is open-circuited to inhibit interference with the operation of the large magnetic loop 302. Alternatively, a load or resistor can be applied to the small magnetic loop 304 to detune it to further inhibit interference with the operation of the large magnetic loop 302. Once the large magnetic loop 302 has been activated, the operator uses the multi-field antenna 300 to scan the boxes to determine in which of the boxes the target test tube is located.

Once the box has been located, the operator switches from the wide field to the narrow field of the small magnetic loop 304 in order to further narrow the search for the target test tube. Because of the resolution of the wide field of the large magnetic loop 302, the operator cannot efficiently determine where in the array of test tubes the target test tube is positioned.

Accordingly, the switch 252 facilitates enabling the second tuning circuit for tuning the small magnetic loop 304. In the present embodiment, the large magnetic loop 302 is open-circuited to inhibit interference with the operation of the small magnetic loop 304. Alternatively, a load or resistor can be applied to the magnetic loop 302 to further inhibit interference with the operation of the small magnetic loop 304. Once the small magnetic loop 304 has been activated, the operator uses the multi-field antenna 300 to scan the rows or columns of the array within the located box to determine in which row or column the target test tube is located.

Once the row or column has been determined, the operator uses from the pointed field of the ferrite nub 306 in order to further narrow the search for the target test tube, Because of the resolution of the narrow field of the small magnetic loop 304. the operator cannot efficiently determine where the target test tube is positioned in the row or column of the array.

At this point, it is not required to further activate the switch 252, because the ferrite nub is coupled with the small magnetic loop 304. The operator uses the pointed filed of the ferrite nub 306 to locate the target test tube within the row or column.

Therefore, it will be appreciated by a person of ordinary skill in the art that the time taken to locate a target item, such as a test tube, can be dramatically reduced using the multi-field antenna as described herein.

A further sample application of the operation of the multi-field antenna 300 is described as follows. In the present example, an operator of a mobile computer 100 desires to take inventory of the test tubes stored in an array in each of a plurality of boxes. Each of the test tubes, as well as each of the boxes includes an RFID tag having a unique identifier. Further, each array comprises a plurality of predefined rows and columns. In the present embodiment, the array comprises rows 1 to 10 and columns 1 to 10. Each position in the array is identified by a number from I to 100.

Before beginning to take inventory, the operator attaches the multi-field antenna 300 to the mobile computer 100, if it is not already attached, and selects the wide field offered by the large magnetic loop 302. Accordingly, the switch 252 facilitates enabling the first tuning circuit for tuning the large magnetic loop 302. In the present embodiment, the small magnetic loop 304 is open-circuited to inhibit interference with the operation of the large magnetic loop 302. Alternatively, a load or resistor can be applied to the small magnetic loop 304 to further inhibit interference with the operation of the large magnetic loop 302. Once the large magnetic loop 302 has been activated, the operator uses the multi-field antenna 300 to scan a box to determine its identifier as well as the identifiers of the test tubes contained therein.

Once the box has been scanned, the operator switches from the wide field to the narrow field of the small magnetic loop 304 in order to further narrow the search for the target test tube.

Because of the resolution of the wide field of the large magnetic loop 302, the operator cannot efficiently determine where in the array of test tubes each of the test tubes is positioned.

Accordingly, the switch 252 facilitates enabling the second tuning circuit for tuning the small magnetic loop 304. In the present embodiment, the large magnetic loop 302 is open-circuited to inhibit interference with the operation of the small magnetic loop 304. Alternatively, a load or resistor can be applied to the large magnetic loop 302 to further inhibit interference with the operation of the small magnetic loop 304. Once the small magnetic loop 304 has been activated, the operator uses the multi-field antenna 300 to scan each of the rows in a predefined order. In the present embodiment, the rows are scanned from row 1 to row 10. Similarly, each of the columns are scanned in a predefined order. In the present embodiment, the columns are scanned from column 1 to column 10.

Once the rows and columns have been scanned, software on the mobile computer 100 arranges the scanned test tubes into their proper positions within the array. The operator can use the pointed field of the ferrite nub 306 in order to validate the position of the test tubes as determined by the software. At this point, it is not required to further activate the switch 252, because the ferrite nub is coupled with the small magnetic loop 304.

Although the invention has been described with reference to certain specific embodiments, various modifications thereof will be apparent to those skilled in the art without departing from the scope of the invention as defined by the appended claims.

For example, although both the large metallic loop 302, the first metallic element 308 and the small metallic loop are described herein as generally rectangular in shape, other shapes may be effectively applied. Example of other possible shapes include circular, oval, and the like. Similarly, the shape of the ferrite nub 306 and the second metallic element 310 may also differ from their described shapes.

Further, in the embodiments described above, the switch 252 is implemented on the mobile computer 100. However, in an example not according to the invention, the switch 252 may also be implemented on the multi-field antenna 300. Further, the switch 252 can be implemented in either hardware or software.

Similarly, in the embodiments described above, the first tuner 312 and the second tuner 314 are implemented on the multi-field antenna 300. However, first tuner 312 and the second tuner 314 may be implemented on the mobile computer 100 instead.

Yet further, the multi-field antenna 300 can be external, paddle antenna or it can be integrated into an end cap of the mobile computer 100. These and other implementations will become apparent to a person of ordinary skill in the art.

## Claims

1. A multi-field antenna (300) configured to be able to receive a signal, the multi-field antenna comprising:
a mobile computer interface (316) configured to interface the multi-field antenna with a mobile computer configured to receive and process the signal;
a first magnetic loop (302) configured to be tuned by a first tuner (312) to provide a first field for reading data; and
a second magnetic loop (304) configured to be tuned by a second tuner (314) to provide a second field for reading data, the second field being narrower than the first field;
**characterized in that** the multi-field antenna (300) is configured to be able to receive a signal over one of a plurality of different fields in response to a switch (252), the multi-field antenna comprising: a first metallic element (308) having structural integrity and configured to cover at least a portion of the second magnetic loop, the first metallic element creating a mask for the large magnetic loop from the small magnetic loop, the first metallic element comprising a slot (320) extending along a length of the first metallic element from one end of the first metallic element to a point proximal an opposite end of the first metallic element, wherein the field area of the second field is defined, in part, based on the dimension of the slot.

2. The multi-field antenna of claim 1, wherein the slot (320) comprises an aperture (322) at the one end of the first metallic element.

3. The multi-field antenna of claim 1 or 2 further comprising a ferrite nub (306) coupled to the second magnetic loop at an end distal to the mobile computer interface, the ferrite nub configured to provide a third field, the third field being narrow than the second field.

4. The multi-field antenna of claim 3 further comprising a second metallic element (310) configured to direct the third field away from the second magnetic loop.

5. The multi-field antenna of any one of claims 1 to 4, wherein the first magnetic loop is substantially rectangular in shape.

6. The multi-field antenna of any one of claims 1 to 5, wherein:
the first magnetic any the second magnetic loop are in the same plane;
the first magnetic loop and the first metallic element are in the same plane; or
the first magnetic loop, the second magnetic loop and the first metallic element are in different planes.

7. The multi-field antenna of any one of claims 1 to 6, wherein the first tuner circuit and the second tuner circuit form part of the multi-field antenna.

8. The multi-field antenna of any one of claims 1 to 7, wherein when the switch is set to enable the first field, the first magnetic loop is activated and the second magnetic loop is deactivated.

9. The multi-field antenna of claim 8, wherein the second magnetic loop is deactivated by at least one of: providing the second magnetic loop with an open circuit or detuning the second magnetic loop.

10. The multi-field antenna of any one of claims 1 to 7, wherein when the switch is set to enable the second field, the second magnetic loop is activated and the first magnetic loop is deactivated.

11. The multi-field antenna of claim 10, wherein the first magnetic loop is deactivated by at least one of providing the first magnetic loop with an open circuit or detuning the first magnetic loop.

12. The multi-field antenna of any one of claims 1 to 11 wherein the switch is provided on the multi-field antenna.

13. A mobile computer (100) configured to communicate with the multi-field antenna (300) of claim 1 to receive a signal over one of a plurality of different fields, the mobile computer comprising:
memory (224) having stored instructions for receiving and processing the signal;
a professor (238) for configured to implement the instructions; and
a switch (252) configured to enable one of the first magnetic loop or the second magnetic loop.

14. The mobile computer of claim 13, wherein the switch is implemented using software, hardware or a combination thereof.

15. The mobile computer of claim 13, wherein the memory further includes instructions for automatically identifying a position of a each plurality of items stored in an array, each of the items being tagged with a device configured to store and transmit a unique identifier, after the rows and columns of the array have been scanned using the multi-field antenna.

## Patentansprüche

1. Mehrfeldantenne (300), die dazu ausgelegt ist, ein Signal zu empfangen, wobei die Mehrfeldantenne umfaßt:
eine Schnittstelle (316) für einen tragbaren Computer, die dazu ausgelegt ist, die Mehrfeldantenne mit einem tragbaren Computer zu koppeln, der dazu ausgelegt ist, das Signal zu empfangen und zu verarbeiten,
eine erste Magnetschleife (302), die dazu ausgelegt ist, durch einen ersten Tuner (312) abgestimmt zu werden, um ein erstes Feld zum Datenlesen bereitzustellen, und
eine zweite Magnetschleife (304), die dazu ausgelegt ist, durch einen zweiten Tuner (314) abgestimmt zu werden, um ein zweites Feld zum Datenlesen bereitzustellen, wobei das zweite Feld schmaler als das erste Feld ist,
**dadurch gekennzeichnet, daß** die Mehrfeldantenne (300) dazu ausgelegt ist als Reaktion auf einen Schalter (252) ein Signal über einem von mehreren verschiedenen Feldern empfangen zu können, wobei die Mehrfeldantenne ein erstes Metallelement (308) umfaßt, das eine strukturelle Einheit bildet und dazu ausgelegt ist, wenigstens einen Abschnitt der zweiten Magnetschleife abzudecken, wobei das erste Metallelement eine Maske für die große Magnetschleife aus der kleinen Magnetschleife erzeugt, wobei das erste Metallelement einen Schlitz (320) umfaßt, der sich entlang einer Länge des ersten Metallelements von einem Ende des ersten Metallelements zu einem Punkt an einem gegenüberliegenden Ende des ersten Metallelements erstreckt, wobei der Feldbereich des zweiten Feldes zum Teil basierend auf der Abmessung des Schlitzes definiert ist.

2. Mehrfeldantenne nach Anspruch 1, wobei der Schlitz (320) eine öffnung (322) an dem einen Ende des ersten Metallelements aufweist.

3. Mehrfeldantenne nach Anspruch 1 oder 2, ferner umfassend eine Ferritnoppe (306), die mit der zweiten Magnetschleife an einem distalen Ende der Schnittstelle für den tragbaren Computer gekoppelt ist, wobei die Ferritnoppe dazu ausgelegt ist, ein drittes Feld bereitzustellen, wobei das dritte Feld schmaler als das zweite Feld ist.

4. Mehrfeldantenne nach Anspruch 3, ferner umfassend ein zweites Metallelement (310), das dazu ausgelegt ist, das dritte Feld von der zweiten Magnetschleife weg zurichten.

5. Mehrfeldantenne nach einem der Ansprüche 1 bis 4, wobei die erste Magnetschleife eine im wesentlichen rechteckige Form hat.

6. Mehrfeldantenne nach einem der Ansprüche 1 bis 5, wobei
die erste Magnetschleife und die zweite Magnetschleife in derselben Ebene liegen,
die erste Magnetschleife und das erste Metallelement in derselben Ebene liegen oder
die erste Magnetschleife, die zweite Magnetschleife und das erste Metallelement in unterschiedlichen Ebenen liegen.

7. Mehrfeldantenne nach einem der Ansprüche 1 bis 6, wobei der erste Tunerschaltkreis und der zweite Tunerschaltkreis einen Teil der Mehrfeldantenne bilden.

8. Mehrfeldantenne nach einem der Ansprüche 1 bis 7, wobei die erste Magnetschleife aktiviert und die zweite Magnetschleife deaktiviert wird, wenn der Schalter so eingestellt ist, daß er das erste Feld freigibt.

9. Mehrfeldantenne nach Anspruch 8, wobei die zweite Magnetschleife durch wenigstens eines von Versehen der zweiten Magnetschleife mit einem offenen Schaltkreis oder Verstimmen der zweiten Magnetschleife deaktiviert wird.

10. Mehrfeldantenne nach der Anspräche 1 bis 7, wobei die zweite Magnetschleife aktiviert und die erste Magnetschleife deaktiviert wird, wenn der Schalter so eingestellt ist, daß er das zweite Feld freigibt.

11. Mehrfeldantenne nach Anspruch 10, wobei die erste Magnetschleife durch wenigstens eines von Versehen der ersten Magnetschleife mit einem offenen Schaltkreis oder Verstimmen der ersten Magnetschleife deaktiviert wird.

12. Mehrfeldantenne nach einem der Ansprüche 1 bis 11, wobei der Schalter auf der Mehrfeldantenne vorgesehen ist.

13. Tragbarer Computer (100), der dazu ausgelegt ist, mit der Mehrfeldantenne (300) nach Anspruch 1 zu kommunizieren, um ein Signal aus einem von mehreren verschiedenen Feldern zu empfangen, wobei der tragbare Computer umfaßt:
einen Speicher (224), in dem Anweisungen zum Empfangen und Verarbeiten des Signals gespeichert sind,
einen Prozessor (238), der dazu ausgelegt ist, die Anweisungen zu implementieren, und
einen Schalter (252), der dazu ausgelegt ist, eine von der ersten Magnetschleife oder der zweiten Magnetschleife anzuschalten.

14. Tragbarer Computer nach Anspruch 13, wobei der Schalter unter Verwendung von Software, Hardware oder eine Kombination davon implementiert wird.

15. Tragbarer Computer nach Anspruch 13, wobei der Speicher ferner Anweisungen zum automatischen Identifizieren einer Position jedes der mehreren in einem Array gespeicherten Datenwörter umfaßt, wobei jedes der Datenwörter mittels einer Vorrichtung markiert ist, die dazu ausgelegt ist, einen einzigartigen Identifizierer zu speichern und zu übertragen, nachdem die Reihen und Spalten des Arrays unter Verwendung der Mehrfeldantenne abgetastet worden sind.

## Revendications

1. Antenne à champs multiples (300) configurée pour pouvoir recevoir un signal, l'antenne à champs multiples comportant :
une interface d'ordinateur mobile (316) configurée pour effectuer une interface entre l'antenne à champs multiples et un ordinateur mobile configuré pour recevoir et traiter le signal ;
une première boucle magnétique (302) configurée pour être accordée par un premier tuner (312) afin de délivrer un premier champ pour lire des données ; et
une seconde boucle magnétique (304) configurée pour être accordée par un second tuner (314) afin de délivrer un second champ pour lire des données, le second champ étant plus étroit que le premier champ ;
**caractérisée en ce que** l'antenne à champs multiples (300) est configurée pour pouvoir recevoir un signal sur l'un d'une pluralité de différents champs en réponse à un commutateur (252), l'antenne à champs multiples comportant : un premier élément métallique (308) possédant une intégrité structurale et configuré pour couvrir au moins une partie de la seconde boucle magnétique, le premier élément métallique créant un masque pour la grande boucle magnétique à partir de la petite boucle magnétique, le premier élément métallique comportant une fente (320) s'étendant le gong d'une longueur du premier élément métallique à partir d'une extrémité du premier élément métallique jusqu'à un point proche d'une extrémité apposée du premier élément métallique, où la zone de champ du second champ est définie, en partie, en fonction de la dimension de la fente,

2. Antenne à champs multiples selon la revendication 1, dans laquelle la fente (320) comporte une ouverture (322) à une extrémité du premier élément métallique.

3. Antenne à champs multiples selon la revendication 1 ou 2 comportant en outre un noyau de ferrite (306) couplé à la seconde boucle magnétique à une extrémité distale par rapport à l'interface d'ordinateur mobile, le noyau de ferrite étant configuré pour délivrer un troisième champ, le troisième champ étant plus étroit que le second champ.

4. Antenne à champs multiples selon la revendication 3, comportant en outre un second élément métallique (310) configuré pour éloigner le troisième champ de la seconde boucle magnétique.

5. Antenne à champs multiples selon l'une quelconque des revendications 1 à 4, dans laquelle la première boucle magnétique est sensiblement de forme rectangulaire.

6. Antenne à champs multiples selon l'une quelconque des revendications 1 à 5, dans laquelle :
la première boucle magnétique et la seconde boucle magnétique sont dans le même plan ;
la première boucle magnétique et le premier élément métallique se trouvent dans le même plan ; ou
la première boucle magnétique, la seconde boucle magnétique et le premier élément métallique se trouvent dans des plans différents.

7. Antenne à champs multiples selon l'une quelconque des revendications 1 à 6, dans laquelle le premier circuit de tuner et le second circuit de tuner forment une partie de l'antenne à champs multiples.

8. Antenne à champs multiples selon l'une quelconque des revendications 1 à 7, dans laquelle lorsque le commutateur est déterminé pour autoriser le premier champ, la première boucle magnétique est activée et la seconde boucle magnétique est désactivée.

9. Antenne à champs multiples selon la revendication 8, dans lequel la seconde boucle magnétique est désactivée par au moins l'un de : la délivrance d'un circuit ouvert à la seconde boucle magnétique ou le désaccord de la seconde boucle magnétique.

10. Antenne à champs multiples selon l'une quelconque des revendications 1 à 7, dans laquelle lorsque le commutateur est déterminé pour autoriser le second champ, la seconde boucle magnétique est activée et la première boucle magnétique est désactivée.

11. Antenne à champs multiples selon la revendication 10, dans laquelle la première boucle magnétique est désactivée par au moins l'un de la délivrance d'un circuit ouvert à la première boucle magnétique ou le désaccord de la première boucle magnétique.

12. Antenne à champs multiples selon l'une quelconque des revendications 1 à 11, dans laquelle le commutateur est prévu sur l'antenne à champs multiples.

13. Ordinateur mobile (100) configuré pour communiquer avec une antenne à champs multiples (300) selon la revendication 1 afin de recevoir un signal sur l'un d'une pluralité de différents champs, l'ordinateur mobile comportant :
une mémoire (224) possédant des instructions mémorisées pour recevoir et traiter le signal ;
un processeur (238) configuré pour mettre en oeuvre les instructions : et
un commutateur (252) configuré pour autoriser l'une de la première boucle magnétique ou de la seconde boucle magnétique.

14. Ordinateur mobile selon la revendication 13, dans lequel le commutateur est mis en oeuvre en utilisant un logiciel, un matériel ou une combinaison des deux.

15. Ordinateur mobile selon la revendication 13, dans lequel la mémoire comprend en outre des instructions pour identifier automatiquement une position de chaque pluralité d'éléments mémorisés dans un réseau, chacun des éléments étant étiqueté avec un dispositif configuré pour mémoriser et transmettre un unique identifiant, après que les ragées est les colonnes du réseau ont été scannées en utilisant l'antenne à champs multiples.
